# FASCICULE DE BREVET EUROPEEN

(11) **EP 0 751 606 B1**
(45) Date de publication et mention de la délivrance du brevet: **03.11.1999**
(21) Numéro de dépôt: 96401362.7
(22) Date de dépôt: 20.06.1996
(51) Int. Cl.: H02K 11/04, H02K 5/22

(54) **Alternateur de véhicule automobile muni de moyens perfectionnés de fixation d'un dispositif de régulation de courant**
Wechselstromgenerator für Kraftfahrzeuge mit verbesserten Mitteln zur Befestigung einer Stromregelvorrichtung
Alternator for vehicle with improved means for fastening a current control device

(30) Priorité: 26.06.1995 FR 9507751
(43) Date de publication de la demande: 02.01.1997
(73) Titulaire: VALEO EQUIPEMENTS ELECTRIQUES MOTEUR, 94000 Créteil (FR)
(72) Inventeur: Abadia, Roger, 93360 Neuilly/Plaisance (FR); Forel, Alain, 77184 Emerainville (FR)
(74) Mandataire: Kohn, Philippe

(56) Documents cités:
- FR-A- 1 388 121
- FR-A- 2 603 431
- FR-A- 2 629 287
- US-A- 3 538 362
- US-A- 4 680 495

## Description

L'invention concerne un alternateur de véhicule automobile.

L'invention concerne plus particulièrement un alternateur de véhicule automobile, muni d'un flasque d'extrémité axiale sur une face circulaire externe duquel est monté un dispositif de régulation du courant produit par l'alternateur comportant, empilés selon la direction axiale :
- deux dissipateurs de chaleur, positif et négatif, sous la forme de plaques en arc de cercle agencées à la périphérie de la face circulaire du flasque et sur lesquels sont montées des diodes appartenant à un pont redresseur du courant produit par l'alternateur ;
- un connecteur monté au-dessus des dissipateurs et relié électriquement aux diodes de redressement, le connecteur comportant une plaque sensiblement en arc de cercle qui comporte une série de points d'appui et de fixation du connecteur sur les dissipateurs ;
- un support de bornes monté sur le connecteur par une série de points d'appui et de fixation agencés à la périphérie circulaire du dispositif ;
- un porte-balais sur lequel est agencé un régulateur du courant d'excitation qui parcourt un bobinage inducteur rotorique de l'alternateur ; et
- une borne de sortie d'alternateur qui comporte une tige filetée fixée sur le dissipateur positif et qui comporte un noyau de contact porté par le support de bornes, traversé par la tige filetée et contre lequel une cosse du circuit d'alimentation de la batterie du véhicule est serrée par un écrou vissé sur la tige ;
le dispositif étant du type dans lequel le courant d'excitation est prélevé à la sortie d'un bobinage induit statorique de l'alternateur et distribué par le connecteur d'une part vers une borne d'entrée du porte-balais par l'intermédiaire d'une borne sortie de courant d'excitation et, d'autre part, vers une borne de courant d'excitation du support de bornes au travers d'un contact soudé entre le connecteur et le support de bornes.

Cette conception connue d'un alternateur, décrite par exemple dans le document FR-U-2 629 287, est bien adaptée pour les véhicules de tourisme car elle permet de réaliser d'une manière modulaire et économique la régulation du courant fourni par l'alternateur.

Cette conception, transposée dans un environnement plus sévère, et notamment dans le cas d'une implantation sur un véhicule poids-lourd, peut toutefois se révéler sensible aux fortes vibrations qui y règnent.

Cette sensibilité peut conduire à la rupture de certains composants ou raccordements électriques de manière prématurée, ce qui est particulièrement pénalisant sur des véhicules utilisés intensément.

Dans le but de proposer une solution à ce problème, l'invention propose un alternateur du type vu précédemment, caractérisé en ce qu'il est prévu une barrette rigide qui s'étend sensiblement radialement sur une face supérieure du support de bornes et qui est fixée par une première extrémité sur le support de bornes, et par une seconde extrémité sur le connecteur de manière à rigidifier la fixation du support de bornes sur le connecteur.

Selon d'autres caractéristiques de l'invention :
- la barrette rigide est réalisée en matériau conducteur, sa première extrémité est fixée sur la borne de courant d'excitation du support de bornes, et sa seconde extrémité est fixée sur la borne de sortie de courant d'excitation du connecteur, avec la borne d'entrée du porte-balais, de manière à doubler l'alimentation électrique de la borne de courant d'excitation du support de bornes ;
- la barrette rigide est réalisée en tôle pliée ;
- la barrette est fixée de manière démontable sur le support de bornes et sur le connecteur ;
- il est prévu une entretoise interposée entre le noyau du support de bornes et le dissipateur positif, et le noyau est serré contre l'entretoise par un écrou de fixation de la cosse d'alimentation de la batterie ;
- l'entretoise est réalisée sous la forme d'un insert en forme de manchon solidaire du connecteur et serré axialement entre le dissipateur et le noyau ;
- l'entretoise est réalisée sous la forme d'une douille vissée sur la tige filetée et serrée en appui contre le dissipateur ;
- il est prévu des points complémentaires d'appui et de fixation du connecteur sur le flasque d'extrémité axiale ;
- le flasque est muni d'au moins une colonnette qui s'étend axialement depuis la face externe et sur laquelle le connecteur est en appui et fixé par une vis ;
- les points d'appui et de fixation du connecteur sur les dissipateurs sont agencés à la périphérie circulaire du dispositif et les points d'appui et de fixation complémentaires du connecteur sur le flasque sont agencés dans une zone centrale de la face circulaire externe du flasque.

D'autres avantages de l'invention apparaîtront à la lecture de la description détaillée qui suit pour la compréhension de laquelle on se reportera aux dessins annexés dans lesquels :

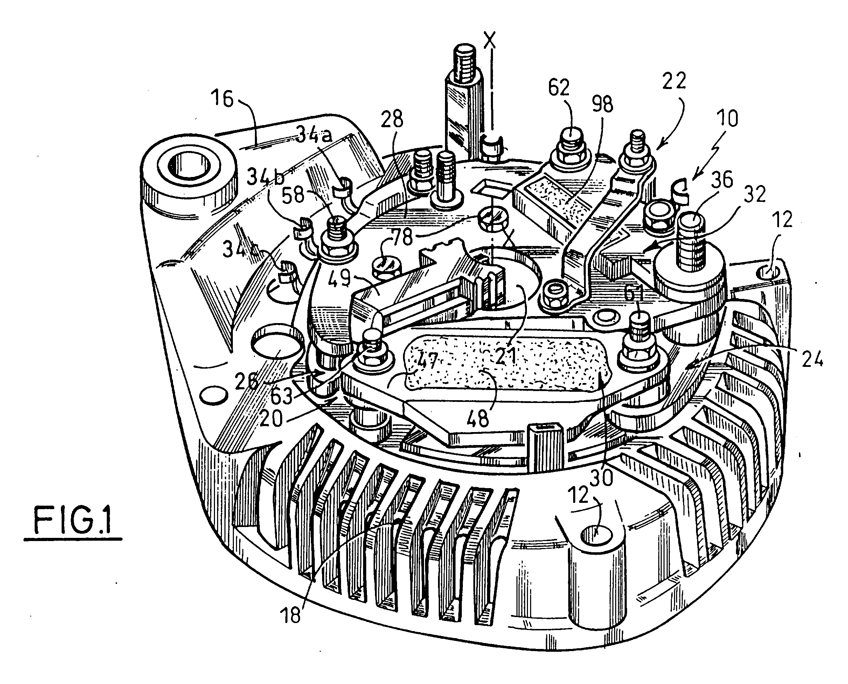

- La figure 1 est une vue schématique en perspective d'un flasque d'extrémité axiale muni d'un dispositif de régulation conforme aux enseignements de l'invention;
- la figure 2 est une vue de dessus d'un tel flasque;
- la figure 3 est une vue partielle en perspective éclatée du dispositif de régulation ;
- la figure 4 est une vue partielle en section selon la ligne 4-4 de la figure 2 d'un flasque muni d'un tel dispositif et protégé par un capot protecteur ;
- la figure 5 est une coupe partielle illustrant un premier mode de réalisation d'une borne de sortie de l'alternateur ;
- la figure 6 est une vue similaire à celle de la figure 5 représentant un second mode de réalisation de la borne de sortie de l'alternateur ;
- la figure 7 est une vue partielle en section selon la ligne 7-7 de la figure 2 de la borne de sortie du connecteur ;
- la figure 8 est une vue schématique en perspective éclatée illustrant la fixation du connecteur sur le flasque conformément à l'invention ;
- la figure 9 est une vue en coupe selon la ligne 9-9 de la figure 2 illustrant une telle fixation.

Le flasque d'extrémité axiale 10 qui est représenté sur les figures est destiné à fermer axialement un alternateur triphasé de véhicule automobile (non représenté). Le flasque est réalisé par moulage en alliage.

Pour cela, il est prévu à la périphérie du flasque 10 une série de perçages 12 destinés à recevoir des goujons 14 qui, traversant axialement l'alternateur, coopèrent avec un second flasque (non représenté) qui ferme la seconde extrémité axiale de l'alternateur.

Le flasque 10 est par ailleurs muni d'une aile transversale 16 de fixation de l'alternateur sur le groupe motopropulseur (non représenté).

Afin de favoriser le refroidissement de l'alternateur, des ouïes d'aération 18 sont agencées dans la périphérie du flasque 10.

Le flasque 10 présente une face axiale externe 20 sensiblement circulaire et plane, centrée autour de l'axe X-X de l'alternateur, et munie en son centre d'un orifice 21 pour le passage de l'extrémité (non représentée) de l'arbre du rotor de l'alternateur qui porte un collecteur.

Sur la face axiale externe 20 est agencé un dispositif de régulation 22 du courant produit par l'alternateur.

Les principaux éléments constitutifs de ce dispositif de régulation 22 sont deux dissipateurs de chaleur, positif 24 et négatif 26, un connecteur 28, un porte-balais 30, et un support de bornes 32.

Les dissipateurs de chaleur 24, 26 sont constitués de plaques métalliques en arc de cercle qui sont agencées à la périphérie de la face externe 20 circulaire du flasque 10.

Des diodes (non représentées) sont montées sur les dissipateurs de chaleur (24, 26) de manière à former un pont redresseur pour le courant fourni par l'alternateur.

Le connecteur 28 est monté au-dessus des dissipateurs 24, 26.

Le connecteur 28 est une plaque sensiblement semi-circulaire, réalisée en matériau isolant, et dans laquelle sont noyés des conducteurs électriques (non représentés) qui réalisent des raccordements électriques entre différentes bornes du connecteur 28 et qui forment notamment un circuit de charge de la batterie du véhicule et un circuit d'excitation pour l'alimentation du bobinage inducteur rotorique (non représenté).

Les différentes bornes sont reliées soit au bobinage statorique induit (non représenté) de l'alternateur, soit aux autres éléments 24, 26, 30, 32 du dispositif de régulation 22.

Notamment, le connecteur 28 est muni de trois bornes 34a, 34b, 34c qui sont agencées à sa périphérie circulaire et qui sont destinées à recevoir chacune une des phases de courant produites dans le bobinage induit statorique.

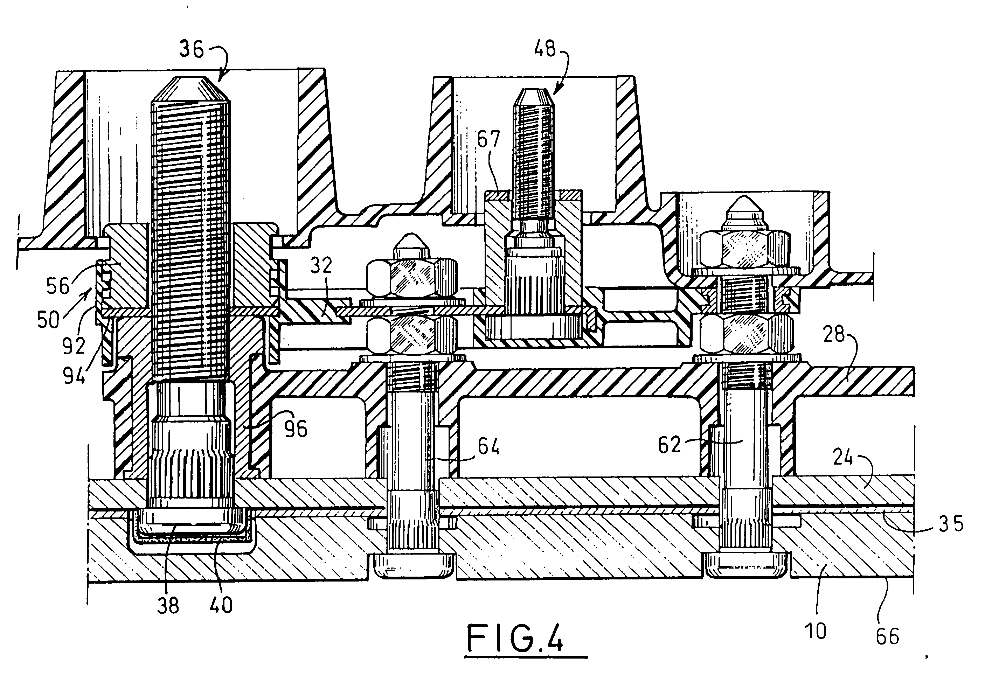

De manière connue, le dissipateur négatif 26 est directement en contact avec le flasque 10 de manière à former une masse électrique tandis que le dissipateur positif 24 est agencé contre le flasque avec interposition d'une plaque isolante 35, comme on peut le voir à la figure 4.

Sur cette même figure 4, on peut voir une tige filetée 36 qui est sertie dans le dissipateur positif 24 auquel elle est reliée électriquement.

La vis 36 s'étend axialement vers l'extérieur du flasque 10 pour former la borne positive B+ d'alimentation en courant redressé du véhicule.

La tête 38 de la tige filetée 36 qui dépasse au travers du dissipateur positif 24 en direction du flasque 10 est isolée électriquement du flasque 10 par une capsule isolante 40.

Cela est rendu nécessaire afin de ne pas provoquer d'arc électrique entre la tête 38 de la tige 36 formant la borne positive du circuit de charge de la batterie et le flasque 10 qui est relié à la masse électrique du circuit.

La régulation du courant électrique fourni par l'alternateur est réalisée en faisant varier le courant d'excitation qui parcoure le bobinage inducteur rotorique.

Ce courant d'excitation est transmis au rotor par l'intermédiaire de balais 42 qui frottent sur un collecteur tournant (non représenté).

Le courant d'excitation est prélevé sur le connecteur 28, en sortie du pont redresseur et est transmis au porte-balais 30 par l'intermédiaire d'une borne de sortie 44 du connecteur 28 et d'une borne d'entrée 46 du porte-balais 30.

Le porte-balais 30 comporte un corps principal 47 dans lequel est logé un régulateur électronique 48 qui est interposé entre la borne d'entrée 46 et les balais 42 et qui régule le courant d'excitation transmis au bobinage inducteur.

Le corps principal 47 s'étend sensiblement à la périphérie du dispositif 22 et un boîtier 49 de guidage des balais 42, solidaire du corps principal 47, s'étend radialement vers l'intérieur en direction de l'orifice central 21 de la face circulaire externe 20 du flasque 10.

Le porte-balais 30 est fixé par deux vis dont l'une 61 permet d'établir un contact électrique entre le porte-balais 30 et le dissipateur positif 24 et dont la seconde 63 permet d'établir une prise de masse électrique sur le flasque 10.

Le support de bornes 32 est monté sur le connecteur 28 et comporte pour l'essentiel deux bornes 48, 50 qui sont reliées respectivement au circuit d'excitation et au circuit de charge.

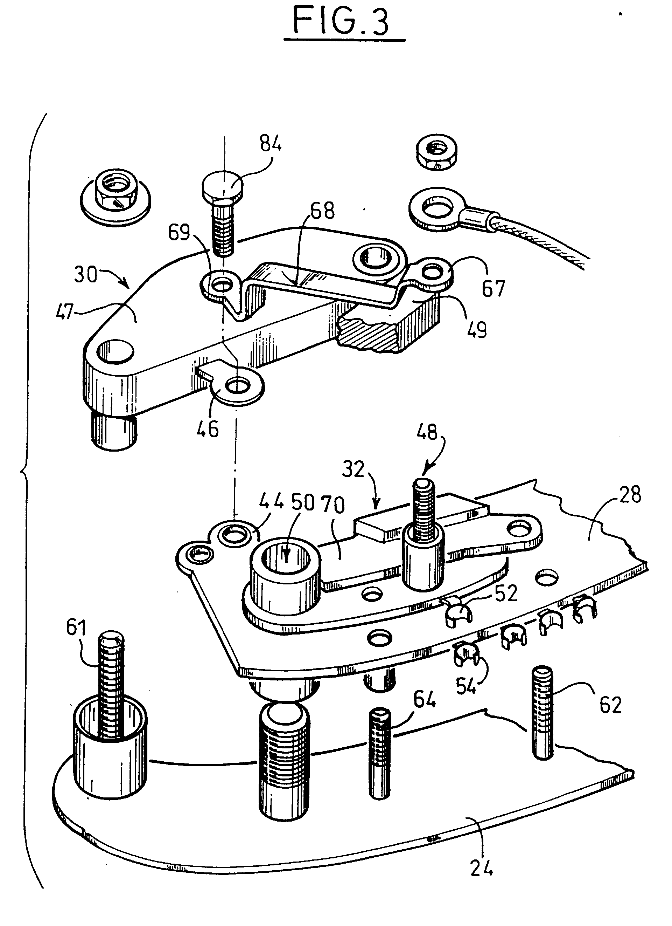

Selon l'état de la technique, l'alimentation de la borne de courant d'excitation 48 est réalisée par une soudure entre deux contacts 52, 54, visibles notamment sur la figure 3, et agencés en vis-à-vis respectivement sur le support de bornes 32 et sur la périphérie circulaire du connecteur 28.

La borne 50 du circuit de charge comporte notamment un noyau 56 qui est traversé axialement par la tige filetée 36 qui forme la borne B+ d'alimentation de la batterie.

De manière connue, les dissipateurs 24, 26, le connecteur 28 et le support de bornes 32 sont fixés simultanément par empilement à l'aide de vis 58, 60, 62, 64 dont la tête est en appui contre la face axiale interne 66 du flasque 10 et qui s'étendent axialement vers l'extérieur du flasque 10.

Les vis 58, 60, 62, 64 sont disposées selon un arc de cercle, sensiblement à la périphérie de la face circulaire 20 du flasque 10.

Cette disposition des vis à la périphérie permet de disposer de suffisamment de place dans la zone centrale de chacun de ces éléments pour l'agencement des composants électroniques et des circuits de raccordement.

Toutefois, ces zones centrales ne sont pas soutenues de manière très rigide et il est apparu, en cas d'utilisation dans un environnement dans lequel règnent de fortes vibrations, que les zones centrales du connecteur 28 et du support de bornes 32 pouvaient se déformer sous l'effet des vibrations, parfois jusqu'à provoquer la rupture ou le mauvais fonctionnement de ces éléments.

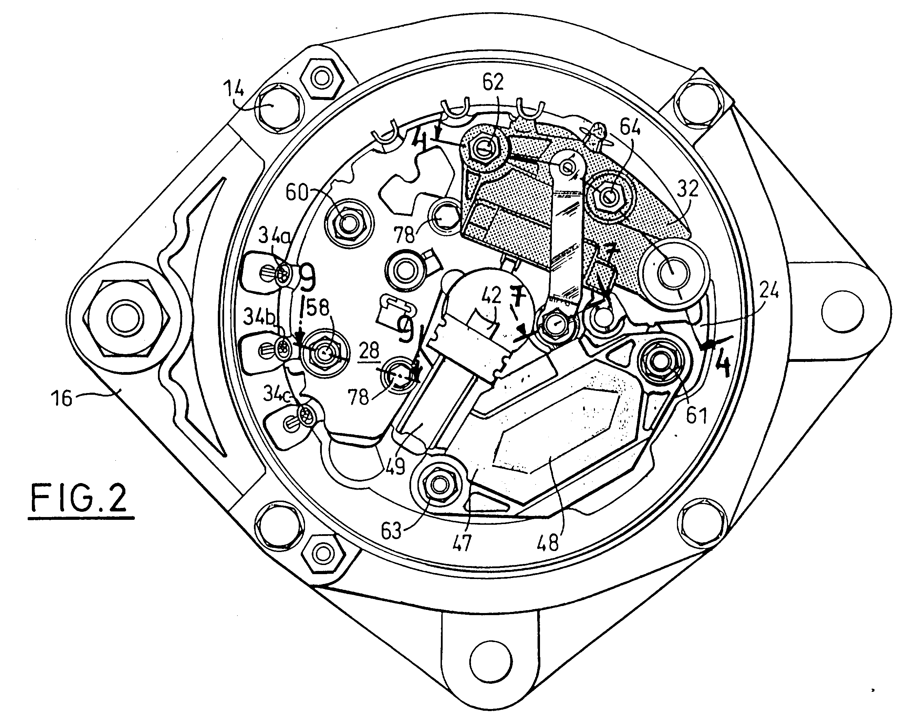

De plus, comme on peut le voir plus particulièrement sur la figure 2, le noyau 56 du support de bornes 32 est monté en porte-à-faux par rapport aux deux vis 62, 64 sur lesquelles est fixé le support de bornes 32.

Afin de réduire les risques de mauvais fonctionnement du dispositif de régulation 22, l'invention propose des moyens pour améliorer la rigidité de la fixation du dispositif 22 sur le flasque 10.

Un premier aspect de l'invention consiste en l'adjonction d'une barrette rigide 68 dont une première extrémité 67 est fixée sur la borne 48 de courant d'excitation du support de bornes 32 et dont la seconde extrémité 69 est fixée simultanément avec la borne de sortie 44 du connecteur 28 et avec la borne d'entrée 46 du porte-balais 30.

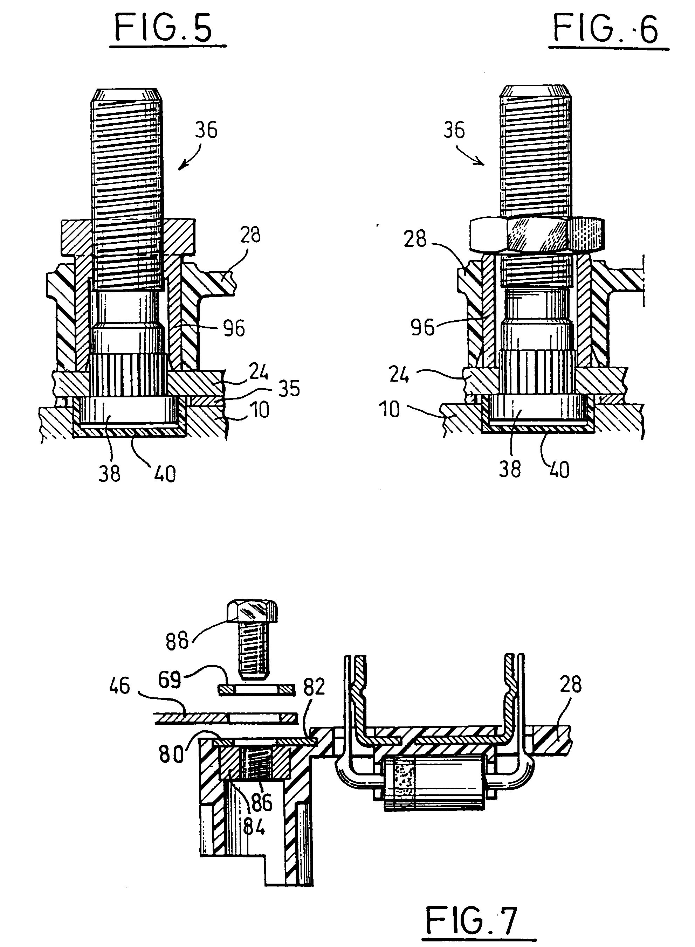

Comme on peut le voir plus précisément sur la figure 7, La borne de sortie de courant d'excitation 44 du connecteur 28 est constituée d'une extrémité affleurante en forme de rondelle 80 d'un conducteur 82 noyé dans le connecteur 28. La rondelle 80 est en appui sur un insert métallique 84 muni d'un taraudage 86.

Pour l'assemblage du dispositif, la borne d'entrée 46 du porte-balais 30 et la seconde extrémité 69 de la barrette 68 sont superposées sur la rondelle 80 et sont fixées ensemble par une vis 88 engagée dans le taraudage 86.

La barrette 68 est réalisée en matériau conducteur de sorte qu'on double ainsi l'alimentation électrique de la borne 48 de courant d'excitation, de manière à pallier une éventuelle rupture de la soudure entre les contacts 52, 54 du support de bornes 32 et du connecteur 28.

De plus, la barrette 68 est réalisée en tôle pliée de telle sorte qu'elle prend appui contre une face supérieure 70 du support de bornes 32.

Ainsi, la barrette 68 qui s'étend sensiblement radialement, permet un serrage complémentaire du support de bornes 32 contre le connecteur 28, ce qui empêche toute vibration de la zone située radialement au centre du support de bornes 32.

Selon un deuxième aspect de l'invention, il est proposé des moyens qui permettent de rigidifier le support de bornes 32 au niveau du noyau 56 de contact avec le circuit de charge.

Ainsi que cela est représenté à la figure 4, le noyau 56 est monté flottant axialement et libre à rotation dans un logement annulaire 92 agencé sur la face supérieure 70 du support de bornes 32.

Le noyau 56 sert de contact pour une cosse (non représentée) de liaison à la batterie.

Le noyau 56 est destiné à venir en appui contre une rondelle métallique transversale 94 qui est sertie au fond du logement 92 et qui est reliée à un composant électronique 98 porté par le support de bornes 32.

Afin d'empêcher tout déplacement axial du logement 92 du support de bornes 32, il est prévu une entretoise en matériau conducteur 96 qui est agencé axialement autour de la tige filetée 36 et qui est en appui axialement d'une part contre le dissipateur positif 24 et, d'autre part, contre la rondelle sertie 94.

Ainsi, lorsque la cosse est serrée contre le noyau 56 grâce à un écrou vissé sur la tige filetée 36, on obtient, par empilement, un serrage axial de la cosse, du noyau 56, de la rondelle 94, de l'entretoise 96 et du dissipateur positif 24.

Dans le mode de réalisation illustré sur la figure 4, l'entretoise 96 est réalisée sous la forme d'un insert en forme de manchon qui est solidaire du connecteur 28. Cette caractéristique est particulièrement intéressante car elle permet de réaliser un point de fixation supplémentaire du connecteur 28 sur le dissipateur positif 24.

On a représenté plus particulièrement sur les figures 5 et 6 deux autres modes de réalisation de l'entretoise 96.

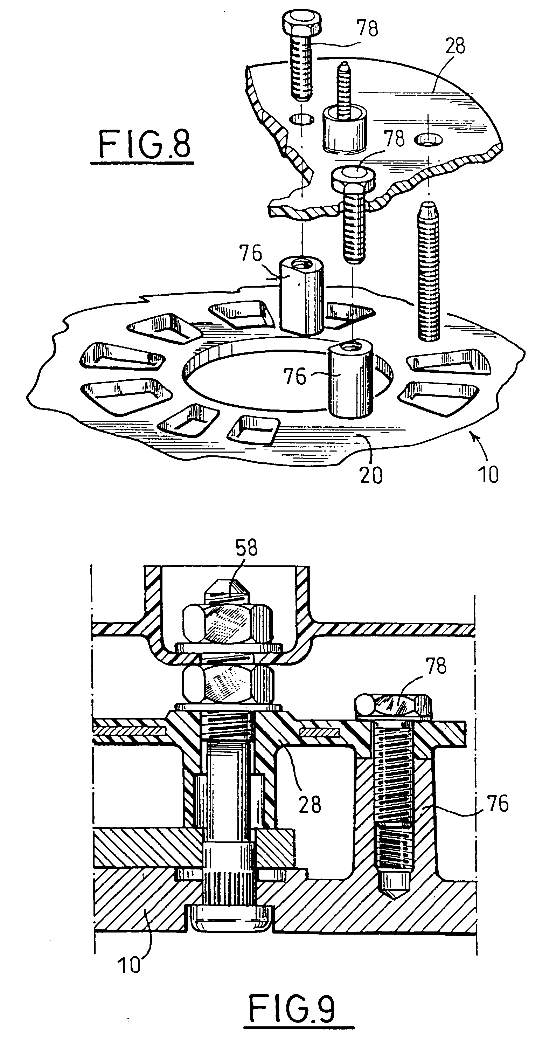

Selon le mode de réalisation représenté sur la figure 8, l'entretoise 96 est une douille vissée sur la tige filetée 36, en appui contre le dissipateur 24, tandis que selon celui de la figure 9, l'entretoise 96 est réalisée sous la forme d'un manchon lisse serré contre le dissipateur par un écrou vissé sur la tige filetée 36.

On a représenté sur les figures 8 et 9 un troisième aspect de l'invention qui a pour but de rigidifier la fixation du connecteur 28.

A cet effet, il est prévu deux colonnettes 76 qui s'étendent axialement depuis le flasque 10 en direction du connecteur 28, dans une zone sensiblement centrale de la face circulaire axiale 20 du flasque 10.

De préférence, ces colonnettes 76 sont réalisées venues de matière par moulage avec le flasque 10.

Le connecteur 28 est en appui contre les colonnettes 76 et il est prévu des vis de fixation 78 du connecteur 28 qui sont vissées dans des taraudages des colonnettes 76 de manière à créer deux points d'appui et de fixation complémentaires dans une zone du connecteur 28 précédemment en porte-à-faux.

## Revendications

1. Alternateur de véhicule automobile, muni d'un flasque d'extrémité axiale (10) sur une face circulaire externe (20) duquel est monté un dispositif de régulation (22) du courant produit par l'alternateur comportant, empilés selon la direction axiale :
- deux dissipateurs de chaleur, positif (24) et négatif (26), sous la forme de plaques en arc de cercle agencées à la périphérie de la face circulaire (20) du flasque (10) et sur lesquels sont montées des diodes appartenant à un pont redresseur du courant produit par l'alternateur ;
- un connecteur (28) monté au-dessus des dissipateurs (24, 26) et relié électriquement aux diodes de redressement, le connecteur (28) comportant une plaque sensiblement en arc de cercle qui comporte une série de points d'appui et de fixation (58, 60, 62, 64) du connecteur (28) sur les dissipateurs (24, 26) ;
- un support de bornes (32) monté sur le connecteur (28) par une série de points d'appui et de fixation (62, 64) agencés à la périphérie circulaire du dispositif (22);
- un porte-balais (30) sur lequel est agencé un régulateur (48) du courant d'excitation qui parcourt un bobinage inducteur rotorique de l'alternateur ; et
- une borne de sortie d'alternateur qui comporte une tige filetée (36) fixée sur le dissipateur positif (24) et qui comporte un noyau de contact (56) porté par le support de bornes (32), traversé par la tige filetée (36) et contre lequel une cosse du circuit d'alimentation de la batterie du véhicule est serrée par un écrou vissé sur la tige filetée (36) ;
le dispositif (22) étant du type dans lequel le courant d'excitation est prélevé à la sortie d'un bobinage induit statorique de l'alternateur et distribué par le connecteur (28) d'une part vers une borne d'entrée (46) du porte-balais (30) par l'intermédiaire d'une borne sortie (44) de courant d'excitation et, d'autre part, vers une borne (48) de courant d'excitation du support de bornes (32) au travers d'un contact soudé (52, 54) entre le connecteur (28) et le support de bornes(32), caractérisé en ce qu'il est prévu une barrette rigide (68) qui s'étend sensiblement radialement sur une face supérieure (70) du support de bornes (32) et qui est fixée par une première extrémité (67) sur le support de bornes (32), et par une seconde extrémité (69) sur le connecteur (28) de manière à rigidifier la fixation du support de bornes (32) sur le connecteur (28).

2. Alternateur selon la revendication 1, caractérisé en ce que la barrette rigide (68) est réalisée en matériau conducteur, en ce que sa première extrémité (67) est fixée sur la borne (48) de courant d'excitation du support de bornes (32), et en ce que sa seconde extrémité (69) est fixée sur la borne (48) de sortie de courant d'excitation du connecteur (28), avec la borne d'entrée (46) du porte-balais (30), de manière à doubler l'alimentation électrique de la borne (48) de courant d'excitation du support de bornes (32).

3. Alternateur selon la revendication 2, caractérisé en ce que la barrette rigide (68) est réalisée en tôle pliée.

4. Alternateur selon l'une quelconque des revendications précédentes, caractérisé en ce que la barrette rigide (68) est fixée de manière démontable sur le support de bornes (32) et sur le connecteur (28).

5. Alternateur selon l'une quelconque des revendications précédentes, caractérisé en ce qu'il est prévu une entretoise (96) interposée entre le noyau (56) du support de bornes (32) et le dissipateur positif (24) et en ce que le noyau (56) est serré contre l'entretoise (96) par un écrou de fixation de la cosse d'alimentation de la batterie.

6. Alternateur selon la revendication 5, caractérisé en ce que l'entretoise (96) est réalisée sous la forme d'un insert en forme de manchon solidaire du connecteur (28) et serré axialement entre le dissipateur (24) et le noyau (56).

7. Alternateur selon la revendication 5, caractérisé en ce que l'entretoise (96) est réalisée sous la forme d'une douille vissée sur la tige filetée (36) et serrée en appui contre le dissipateur (24).

8. Alternateur selon l'une quelconque des revendications précédentes, caractérisé en ce qu'il est prévu des points complémentaires (76) d'appui et de fixation du connecteur (28) sur le flasque d'extrémité axiale (10).

9. Alternateur selon la revendication 8, caractérisé en ce que le flasque (10) est muni d'au moins une colonnette (76) qui s'étend axialement depuis la face externe (20), et sur laquelle le connecteur (28) est en appui et fixé par une vis (78).

10. Alternateur selon l'une des revendication 8 ou 9, caractérisé en ce que les points d'appui (58, 60, 62, 64) et de fixation du connecteur (28) sur les dissipateurs (24, 26) sont agencés à la périphérie circulaire du dispositif (22) et en ce que les points d'appui et de fixation complémentaires (76) du connecteur (28) sur le flasque (10) sont agencés dans une zone centrale de la face circulaire externe (20) du flasque (10).

## Patentansprüche

1. Wechselstromgenerator für Kraftfahrzeuge mit einem axialen endseitigen Lagerschild (10), auf dessen kreisförmiger Außenfläche eine Regelvorrichtung (22) zur Regelung des durch den Wechselstromgenerator erzeugten Stroms angebracht ist, umfassend in einer Aneinanderschichtung entlang der axialen Richtung:
- zwei Kühlkörper, einen positiven (24) und einen negativen (26), in Form von kreisbogenförmigen Platten, die am Umfang der kreisförmigen Fläche (20) des Lagerschilds (10) angeordnet sind und auf denen Dioden angebracht sind, die zu einer Gleichrichterbrücke für den durch den Wechselstromgenerator erzeugten Strom gehören;
- einen Verbinder (28), der oberhalb der Kühlkörper (24, 26) angebracht und elektrisch mit zwei Gleichrichterdioden verbunden ist, wobei der Verbinder (28) eine in etwa kreisbogenförmige Platte umfaßt, die eine Reihe von Auflage- und Befestigungspunkten (58, 60, 62, 64) des Verbinders (28) auf den Kühlkörpern (24, 26) enthält;
- einen Klemmenträger (32), der am Verbinder (28) durch eine Reihe von Auflage- und Befestigungspunkten (62, 64) angebracht ist, die am kreisförmigen Umfang der Vorrichtung (22) angeordnet sind;
- einen Bürstenhalter (30), an dem ein Regler (48) für den Erregerstrom angeordnet ist, der durch eine Erregerwicklung des Läufers des Wechselstromgenerators fließt; und
- eine Ausgangsklemme des Wechselstromgenerators, die einen am positiven Kühlkörper (24) befestigten Gewindestift (36) umfaßt und die einen am Klemmenträger (32) angebrachten Kontaktkern (56) enthält, durch den der Gewindestift (36) hindurchgeht und an dem eine Anschlußlasche der Speiseschaltung der Batterie des Fahrzeugs durch eine am Gewindestift (36) verschraubte Mutter festgeklemmt ist;
wobei es sich bei der Vorrichtung (22) um eine Ausführung handelt, in der der Erregerstrom am Ausgang einer Ständerwicklung des Wechselstromgenerators entnommen und durch den Verbinder (28) einerseits über eine Ausgangsklemme (44) für den Erregerstrom zu einer Eingangsklemme (46) des Bürstenhalters (30) und andererseits durch einen zwischen dem Verbinder (28) und dem Klemmenträger (32) angelöteten Kontakt (52, 54) zu einer Erregerstromklemme (48) des Klemmenträgers (32) geleitet wird, **dadurch gekennzeichnet**, daß eine starre Leiste (68) vorgesehen ist, die sich in etwa radial auf einer Oberseite (70) des Klemmenträgers (32) erstreckt und die durch ein erstes Ende (67) am Klemmenträger (32) und durch ein zweites Ende (69) am Verbinder (28) befestigt ist, um die Befestigung des Klemmenträgers (32) auf dem Verbinder (28) zu versteifen.

2. Wechselstromgenerator nach Anspruch 1, **dadurch gekennzeichnet,** daß die starre Leiste (68) aus leitendem Material ausgeführt ist, daß ihr erstes Ende (67) auf der Erregerstromklemme (48) des Klemmenträgers (32) befestigt ist und daß ihr zweites Ende (69) auf der Erregerstromausgangsklemme (48) des Verbinders (28) mit der Eingangsklemme (46) des Bürstenhalters (30) befestigt ist, um die Stromversorgung der Erregerstromklemme (48) des Klemmenträgers (32) zu verdoppeln.

3. Wechselstromgenerator nach Anspruch 2, **dadurch gekennzeichnet,** daß die starre Leiste (68) aus gebogenem Blech ausgeführt ist.

4. Wechselstromgenerator nach einem der vorangehenden Ansprüche, **dadurch gekennzeichnet,** daß die starre Leiste (68) abnehmbar auf dem Klemmenträger (32) und auf dem Verbinder (28) befestigt ist.

5. Wechselstromgenerator nach einem der vorangehenden Ansprüche, **dadurch gekennzeichnet,** daß ein zwischen dem Kern (56) des Klemmenträgers (32) und dem positiven Kühlkörper (24) eingefügtes Abstandsstück (96) vorgesehen ist und daß der Kern (56) durch eine Mutter zur Befestigung der Anschlußlasche zur Speisung der Batterie am Abstandsstück (96) festgeklemmt ist.

6. Wechselstromgenerator nach Anspruch 5, **dadurch gekennzeichnet,** daß das Abstandsstück (96) als Einsatz in Form einer fest mit dem Verbinder (28) verbundenen Muffe ausgeführt ist, die axial zwischen dem Kühlkörper (24) und dem Kern (56) eingespannt ist.

7. Wechselstromgenerator nach Anspruch 5, **dadurch gekennzeichnet,** daß das Abstandsstück (96) in Form einer Hülse ausgeführt ist, die auf dem Gewindestift (36) verschraubt und in Anlage an den Kühlkörper (24) festgeklemmt ist.

8. Wechselstromgenerator nach einem der vorangehenden Ansprüche, **dadurch gekennzeichnet,** daß komplementäre Auflage- und Befestigungspunkte (76) des Verbinders (28) auf dem axialen endseitigen Lagerschild (10) vorgesehen sind.

9. Wechselstromgenerator nach Anspruch 8, **dadurch gekennzeichnet,** daß der Lagerschild (10) mit wenigstens einem Distanzbolzen (76) versehen ist, der sich axial von der Außenfläche (20) aus erstreckt und auf dem der Verbinder (28) zur Auflage kommt und durch eine Schraube (78) befestigt ist.

10. Wechselstromgenerator nach einem der Ansprüche 8 oder 9, **dadurch gekennzeichnet,** daß die Auflage- und Befestigungspunkte (58, 60, 62, 64) des Verbinders (28) auf den Kühlkörpern (24, 26) am kreisförmigen Umfang der Vorrichtung (22) angeordnet sind und daß die komplementären Auflage- und Befestigungspunkte (76) des Verbinders (28) auf dem Lagerschild (10) in einem mittigen Bereich der kreisförmigen Außenfläche (20) des Lagerschilds (10) angeordnet sind.

## Claims

1. A motor vehicle alternator having an end plate (10) at one axial end, with a device (22) being mounted on a circular outer face (20) of the end plate, for regulating the current produced by the alternator, the alternator comprising, in order of their location in the axial direction:
- two heat dissipators, a positive one (24) and a negative one (26), in the form of plates formed as arcs of circles and arranged at the periphery of the circular face (20) of the end plate (10), and on which are mounted diodes of a rectifier bridge for the current produced by the alternator;
- a connector (28) mounted above the dissipators (24, 26) and connected electrically to the rectifier diodes, the connector (28) comprising a plate substantially in the form of an arc of a circle, which includes a series of points (58, 60, 62, 64) of abutment and fastening of the connector (28) on the dissipators (24, 26);
- a terminal support (32) mounted on the connector (28) by means of a series of abutment and fastening points (62, 64) arranged at the circular periphery of the device (22);
- a brush carrier (30) on which there is arranged a regulator (48) for the excitation current that flows in an inductor rotor winding of the alternator; and
- an alternator output terminal which comprises a threaded shank (36) fixed on the positive dissipator (24) and which includes a contact core (56) carried by the terminal support (32), through which the threaded shank (36) passes and against which a terminal of the supply circuit from the battery of the vehicle is clamped by a nut screwed on the threaded shank (36);
the regulating device (22) being of the type in which the excitation current is taken at the output of a stator armature winding of the alternator and distributed through the connector (28), firstly to an input terminal (46) of the brush carrier (30) through an excitation current output terminal (44), and secondly to an excitation current terminal (48) of the terminal carrier (32) through a welded contact (52, 54) between the connector (28) and the terminal support (32), characterised in that a rigid bar (68) is provided, which extends substantially radially on an upper face (70) of the terminal support (32), and which is fixed through a first end (67) on the terminal support (32) and by a second end (69) on the connector (28), whereby to render rigid the fastening of the terminal support (32) on the connector (28).

2. An alternator according to Claim 1, characterised in that the rigid bar (68) is made of a conductive material, in that its first end (67) is fixed on the excitation current terminal (48) of the terminal support (32), and in that its second end (69) is fixed on the excitation current output terminal (48) of the connector (28), together with the input terminal (46) of the brush carrier (30), in such a way as to double up the electrical power supply of the excitation current terminal (48) of the terminal support (32).

3. An alternator according to Claim 2, characterised in that the rigid bar (68) is made of bent metal plate.

4. An alternator according to any one of the preceding Claims, characterised in that the rigid bar (68) is fixed removably on the terminal support (32) and on the connector (28).

5. An alternator according to any one of the preceding Claims, characterised in that a spacer (96) is provided, being interposed between the core (56) of the terminal support (32) and the positive dissipator (24), and in that the core (56) is clamped against the spacer (96) by a fastening nut of the power supply terminal from the battery.

6. An alternator according to Claim 5, characterised in that the spacer (96) is made in the form of an insert which is itself in the form of a sleeve, fixed to the connector (28) and clamped axially between the dissipator (24) and the core (56).

7. An alternator according to Claim 5, characterised in that the spacer (96) is made in the form of a sleeve element screwed on the threaded shank (36) and clamped in abutment against the dissipator (24).

8. An alternator according to any one of the preceding Claims, characterised in that complementary points (76) are provided for abutment and fastening of the connector (28) on the axial end plate (10).

9. An alternator according to Claim 8, characterised in that the end plate (10) is provided with at least one post (76) which extends axially from the outer face (20), and on which the connector (28) is in abutment and to which it is secured by means of a screw (78).

10. An alternator according to Claim 8 or Claim 9, characterised in that the points (58, 60, 62, 64) for abutment and fastening of the connector (28) on the dissipators (24, 26) are arranged at the circular periphery of the said device (22), and in that the complementary points (76) for abutment and fastening of the connector (28) on the end plate (10) are arranged in a central zone of the circular outer face (20) of the end plate (10).
